Europäisches Patentamt

European Patent Office

Office européen des brevets

(11) Veröffentlichungsnummer: **0 379 101**
**A1**

(12) EUROPÄISCHE PATENTANMELDUNG

(21) Anmeldenummer: 90100668.4

(22) Anmeldetag: 13.01.90

(51) Int. Cl.⁵: **B01F 17/00, E21B 43/22**

(30) Priorität: 17.01.89 DE 3901149

(43) Veröffentlichungstag der Anmeldung:
25.07.90 Patentblatt 90/30

(84) Benannte Vertragsstaaten:
DE GB NL

(71) Anmelder: HOECHST AKTIENGESELLSCHAFT
Postfach 80 03 20
D-6230 Frankfurt am Main 80(DE)

(72) Erfinder: Holst, Arno, Dr.
Drususstrasse 3
D-6200 Wiesbaden(DE)
Erfinder: Miller, Dennis, Dr.
Waldallee 73
D-6239 Eppstein/Taunus(DE)

(54) Wässrige Tensideinstellungen auf Basis Eiweisss-Fettsäure-Kondensate und deren Verwendung bei der Erdölförderung.

(57) Wäßrige Tensideinstellungen, enthaltend ein Tensidgemisch aus:

a) 2 bis 95 %, vorzugsweise 20 bis 80 % eines Eiweiß-Fettsäure-Kondensats erhalten durch Umsetzung von 1 Mol eines Proteins der Formel

$$H_2N-CH\text{-}CO\text{-}[NH\text{-}CH\text{-}CO]_n\text{-}NH\text{-}CH\text{-}COOM$$
$$\quad\ \ |\qquad\qquad |\qquad\qquad\quad |$$
$$\quad\ \ R\qquad\qquad R\qquad\qquad\quad R$$

worin R den Bestandteil einer Aminosäure, M ein Alkali- oder Ammonium-Ion und n Zahlen von 0 bis 50, vorzugsweise von 2 bis 33 bedeuten, mit 0,5 bis 4 Mol einer Fettsäure der Formel

$R_1\text{-}COOH$

worin $R_1$ $C_7$-$C_{21}$-Alkyl oder $C_7$-$C_{21}$-Alkenyl bedeutet,

b) 5 bis 98%, vorzugsweise 20 bis 80% eines Kohlenwasserstoffsulfonats und

c) 0 bis 80 % eines alkoxylierten Tensids.

Diese Tensidmischungen werden eingesetzt beim Tensidfluten zur Erhöhung der Ausbeute bei der Rohölförderung.

EP 0 379 101 A1

## Wäßrige Tensideinstellungen auf Basis Eiweiß-Fettsäure-Kondensate und deren Verwendung bei der Erdölförderung

Bei der Förderung von Erdöl erhält man normalerweise nur einen geringen Anteil des in der Lagerstätte vorhandenen Erdöls. Um die Ausbeute zu erhöhen, preßt man Wasser in die Lagerstätte ein - sog. Wasserfluten - oder man preßt eine wäßrige Tensidlösung ein - sog. Tensidfluten. Bei diesem Tensidfluten wird das Tensid als wäßrige Lösung oder Dispersion in die Lagerstätte injiziert. Voraussetzung hierfür ist, daß diese Lösungen oder Dispersionen stabil sind. Es hat sich außerdem als besonders günstig für die Entölung erwiesen, wenn diese Lösungen oder Dispersionen in der Lagerstätte mit dem Öl Mikroemulsionen bilden.

Es ist bekannt, daß Mischungen aus Alkansulfonaten und Alkylphenolpolyglykolethersulfonaten günstige Eigenschaften für die tertiäre Erdölförderung zeigen (DE-Anmeldung P 38 22 834.3). Es wurde nun gefunden, daß Kombinationen von solchen Mischungen mit Eiweiß-Fettsäure-Kondensaten einen Synergismus bei der Mikroemulsionsbildung zeigen und dadurch erhöhte Ausbeuten an Rohöl beim Tensidfluten ergeben.

Gegenstand der Erfindung sind wäßrige Tensideinstellungen enthaltend ein Tensidgemisch aus

a) 2 bis 95 %, vorzugsweise 20 bis 80 % eines Eiweiß-Fettsäure-Kondensats erhalten durch Umsetzung von 1 Mol eines Proteins der Formel

$$H_2N-\underset{\underset{R}{|}}{C}H-CO-[NH-\underset{\underset{R}{|}}{C}H-CO]_n-NH-\underset{\underset{R}{|}}{C}H-COOM$$

worin R den Rest einer Aminosäure, M ein Alkali- oder Ammonium-Ion und n Zahlen von 0 bis 50, vorzugsweise von 2 bis 33 bedeuten, mit 0,5 bis 6, vorzugsweise 0,5-4 Mol eines Fettsäurechlorids der Formel

$$R_1-COCl$$

worin $R_1$ $C_7$-$C_{21}$-Alkyl oder $C_7$-$C_{21}$-Alkenyl bedeutet,

b) 5 bis 98%, vorzugsweise 20 bis 80% eines Kohlenwasserstoffsulfonats und

c) 0 bis 80 % eines alkoxylierten Tensids.

Bevorzugt sind solche Eiweiße mit einem Molgewicht von 500 bzw. 3000, die mit 1 bzw. 2,5 Mol Fettsäurechlorid umgesetzt werden.

Als Ausgangsmaterial für die Herstellung der Komponente a) kann man jede beliebige Quelle für Eiweiß nehmen. Besonders günstig sind Eiweißhydrolysate, die aus den Bindegeweben von Säugetieren, wie Tierhäute, Leimleder, Chromlederfalzspäne oder aus billigen Abfällen in Form von Horn, Borsten, Knochen oder second-cut Wolle gewonnen werden. Diese Produkte werden durch einen chemischen oder biochemischen Prozeß zu Eiweißhydrolysaten der oben angegebenen Art abgebaut und als solche in den Handel gebracht. Der Rest R in der oben angegebenen Formel leitet sich ab von den üblichen Aminosäuren, also von Glycin, Alanin, Valin, Leucin, Isoleucin, Serin, Threonin, Cystein, Cystin, Methionin, Phenylalanin, Tyrosin, Prolin, Oxyprolin, Tryptophan, Lysin, Arginin, Histidin, Asparaginsäure, Glutaminsäure.

Ein typisches Handelsprodukt dieser Art hat folgende Zusammensetzung:

Alanin 9,8
Arginin 9,0
Asparaginsäure 7,0
Cystein 0,2
Glutaminsäure 11,5
Glycin 24,9
Histidin 2,1
Hydroxylysin 1,1
Hydroxyprolin 12,0
Isoleucin 1,8
Leucin 3,3
Lysin 3,7
Methionin 1,0
Phenylalanin 2,1
Prolin 16,9
Serin 3,6
Threonin 2,1
Tryptophan 0,1
Tyrosin 0,9

Valin 2,8
(Alle Angaben in g Aminosäure erhalten aus 100 g Eiweiß)
Diese Eiweiße werden nach an sich bekannten Verfahren mit einem Fettsäurechlorid in den oben angegebenen Mengenverhältnissen umgesetzt. Je nach Herstellungsverfahren kann das Kondensat auch etwas freie Fettsäure und nicht reagiertes Eiweiß enthalten. Die Acylgruppen $R_1$-CO befinden sich zum Teil am Endstickstoff und zum Teil am Stickstoffatom in den Aminosäure-Seitenketten.

Die Komponente b) ist bevorzugt ein primäres oder sekundäres Alkansulfonat, Olefinsulfonat, Petrolsulfonat, Alkylbenzolsulfonat jeweils mit einem Molekulargewicht von 250 bis 500, oder Mischungen dieser Sulfonate. Besonders bevorzugt sind sek. Alkansulfonate oder Alkylbenzolsulfonate mit einem Molgewicht von 300 bis 360.

Als Komponente c) kommen in Frage Alkohole und mono-, di-oder tri-Alkylphenole, jeweils mit einem Gehalt von 8 bis 25C-Atomen, die mit 1 bis 25 Einheiten Ethylen- und/oder Propylenoxid, vorzugsweise mit 3 bis 12 Einheiten Ethylenoxid oxalkyliert sind, sowie die Sulfonate, Sulfate und Carboxylate dieser Alkyl- und Alkylphenoloxalkylate. Darüberhinaus kommen als Komponente c) auch Polyethylenoxid-Polypropylenoxid-Block-Polymere in Frage.

Bevorzugt sind Tensideinstellungen, die sek. Alkansulfonat und Alkylphenolpolyalkoxyethersulfonat enthalten.

Der Gesamttensidgehalt in der wäßrigen Einstellung liegt bei etwa 20 bis 80 Gew.-%. Diese wäßrigen Einstellungen werden für das Tensidfluten weiter mit Salzwasser verdünnt auf einen Gehalt an Tensid von ca. 0,1 bis 10 Gew.-%. Vorzugsweise nimmt man hierfür das mehr oder weniger salzhaltige Wasser aus der Lagerstätte.

Zur Verbesserung der Wirkung kann man dem Flutwasser auch noch Rohöl bzw. Kohlenwasserstoffe oder $C_3$-$C_6$-Alkohole zusetzen. Eine Rohölförderung durch Tensidfluten auf der Grundlage der oben beschriebenen Tensidmischung kann in üblicher Weise mit einem Polymerfluten verbunden werden.

## Experimenteller Teil

### Herstellung der Eiweiß-Fettsäure-Kondensate

Eiweiße werden aus den oben genannten Proteinen durch literaturbekannten Abbau mittels Säuren, Alkali und Enzymen auf geeignetem Wege hergestellt. Die Hydrolyse ist dann beendet, sobald das angestrebte mittlere Molekulargewicht erreicht ist. Als Bestimmungsmethoden kommen die HPLC sowie die Formol-Titration in Frage. Die anfallenden Hydrolysate werden nach Schotten-Baumann acyliert. Dabei finden Säurechloride ausgehend von $C_8$ bis $C_{22}$-Fettsäuren, die einfach-, zweifach- und dreifach ungesättigt sein können, sowie deren Gemische Verwendung. Am Ende der Reaktion werden die Eiweiß-Fettsäure-Kondensate mit Säuren, vorzugsweise mit Salz- bzw. Schwefelsäure schwach sauer bis neutral eingestellt.

### Prüfung des Phasenverhaltens

Fir Mikroemulsionsversuche wurden gleiche Mengen Öl und Salzwasser genommen und man beobachtete den Salinitätsbereich in dem sich das Gemisch in die drei Phasen Salzwasser, Mikroemulsion und Öl trennte.

Die Mikroemulsionsbildung wird durch zwei Parameter charakterisiert:

a) Optimale Salinität. Dies ist die Salinität bei der die Mikroemulsion gleiche Mengen Öl und Wasser enthält. In der Praxis müßte die Tensidmischung so optimiert werden, daß die optimale Salinität den jeweiligen Lagerstättenbedingungen angepaßt wird.

b) Solubilisierungsparameter. Dies ist das Volumenverhältnis Öl/Tensid in der Mikroemulsion bei der optimalen Salinität. Er ist ein Maß für die Menge Mikroemulsion, die gebildet werden kann. Ein hoher Solubilisierungsparameter ist für die Mehrentölung günstig.

Es wurden auch verschiedene Tensid/Salzwasser-Mischungen mit unterschiedlicher Salinität hergestellt. Nach guter Durchmischung wurden die Proben für 24 Stunden temperiert. Man unterscheidet drei Typen von Phasenverhalten

a) klare Lösung
b) Phasentrennung
c) transparente oder trübe homogene Dispersion.

3

Als Salz wurde ein Modell-Lagerstättensalz bestehend aus 95 % NaCl, 3 % $CaCl_2$, 1,75 % $MgCl_2$ und 0,25 % $Na_2SO_4$ benutzt.

Verschiedene Kohlenwasserstoffgemische (Tabelle 1) dienten als Modellöle.

Der Tensidgehalt betrug 2 % bezogen auf das Salzwasser.

**Beispiele**

1. Phasenverhalten erfindungsgemäßer Mischungen mit und ohne Öl

Die Zusammensetzung der geprüften Mischungen wird in Tabellen 2 und 3 beschrieben.

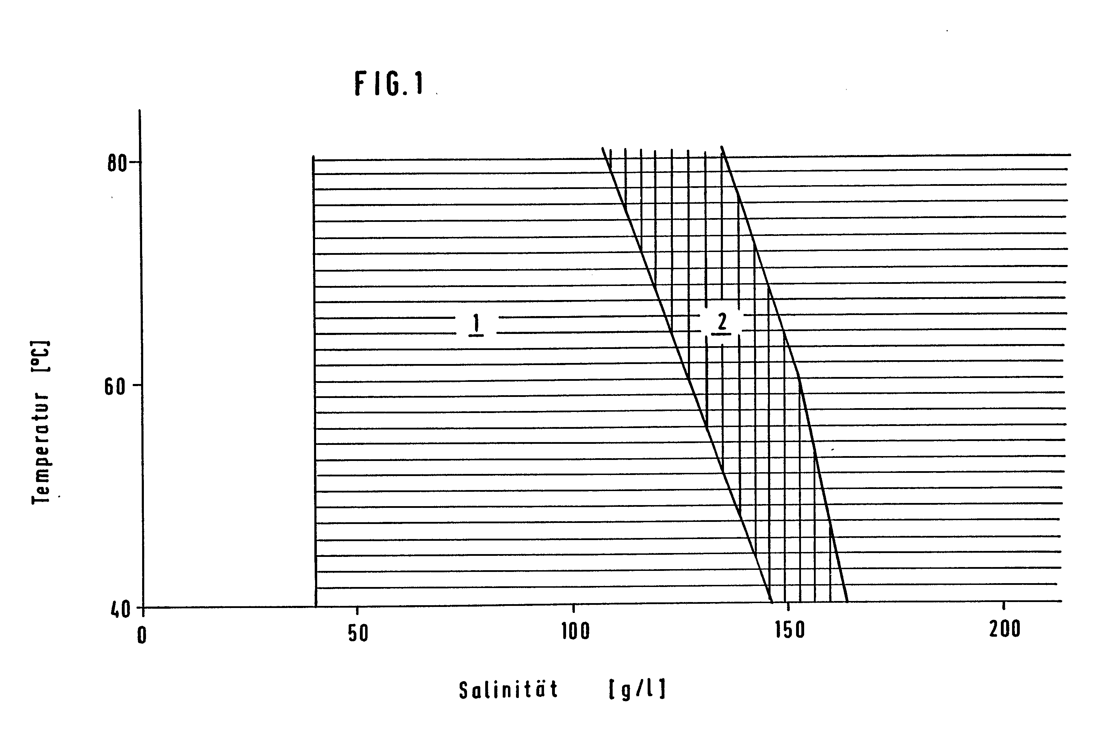

Das Phasenverhalten von Mischung 2 wird in Fig. 1 in Abhängigkeit von der Temperatur und Salinität dargestellt.

Die waagrecht schraffierte Fläche 1 bedeutet den Bereich einer stabilen und homogenen Tensid-/Salzwasser-Dispersion. Die senkrecht schraffierte Fläche 2 bedeutet Mikroemulsionsbildung mit dem Modellöl II. Die Überlappung dieser beiden Bereiche zeigt, daß die Mischung für die tertiäre Erdölförderung wirksam ist.

Das Phasenverhalten weiterer erfindungsgemäßer Mischungen bei 60° C wird in Tabelle 4 dargestellt. Diese Beispiele zeigen auch eine Überlappung der Salinitätsbereiche, bei denen Mikroemulsionen und homogenen Tensid/Wasser Dispersionen gebildet werden. Dies ist für die technische Anwendung günstig.

2. **Synergistische Effekte**

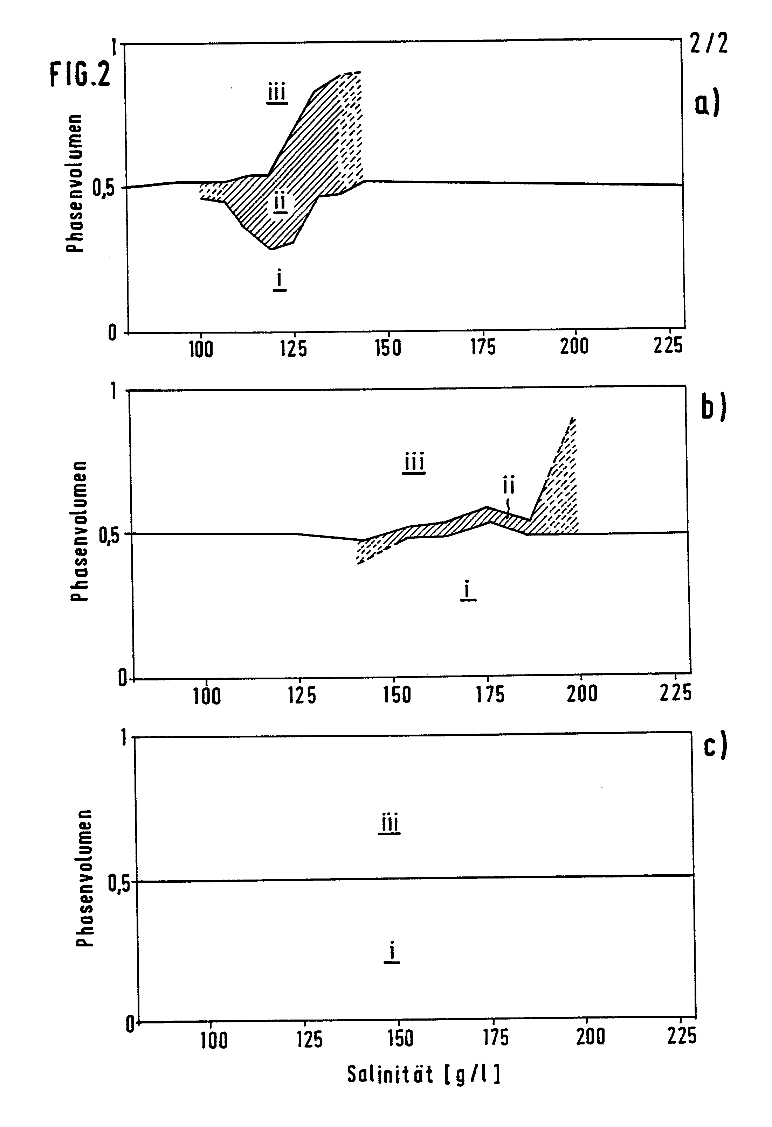

Fig. 2 demonstriert den Synergismus bei der Mikroemulsionsbildung in der erfindungsgemäßen Mischung Nr. 10. Gleiche Volumina Tensidlösung und Modellöl I wurden bei 60° C equilibriert. Die relativen Volumina der auftretenden Phasen nach Erreichung des Gleichgewichts werden in den drei Bildern gezeigt. Wäßrige Phasen sind mit i gekennzeichnet. Der schraffierte Bereich ii bedeutet eine Mikroemulsion. Phasen, die vorwiegend aus Öl bestehen, werden mit iii gekennzeichnet. Fig. 2a zeigt die Tensidlösung enthaltend 2 % der erfindungsgemäßen Mischung Nr. 10. Die Tensidlösung enthält also entsprechend den Angaben in Tabelle 3, 0.8 % einer Alkansulfonat/Ethersulfonat-Kombination und 1,2% eines Eiweiß-Fettsäure-Kondensationsprodukts. Fig. 2b zeigt einen entsprechenden Vergleichsversuch mit einer 0,8 % Lösung dieser Alkansulfonat/Ethersulfonat-Kombination. Fig. 2c zeigt einen Vergleichsversuch mit einer 1,2 % Lösung des Eiweiß-Fettsäure-Kondensationsprodukts. Das Eiweiß-Fettsäure-Kondensationsprodukt allein bildet auch außerhalb des in Abb. 2 gezeigten Salinitätsbereiches keine Mikroemulsion. Mischt man das Eiweiß-Fettsäure-Kondensationsprodukt mit der Alkansulfonat-Ethersulfonat-Kombination, so kommt es überraschenderweise zu einer Erhöhung der Menge an Mikroemulsion.

Tabelle 5 zeigt die Ergebnisse in einem ähnlichen Versuch mit der erfindungsgemäßen Mischung Nr. 5. Auch in diesem Fall ist ein deutlicher Synergismus zu beobachten.

3. **Einfluß von Eiweiß-Fettsäure-Kondensaten auf die Löslichkeit von Petrolsulfonaten**

Die schlechte Löslichkeit von Petrolsulfonaten bei mittleren und höheren Salinitäten beschränkt ihre Einsatzmöglichkeiten bei der Erdölförderung. Die Löslichkeit kann durch Zugabe von Eiweiß-Fettsäure-Kondensationsprodukten verbessert werden. So wurden ein Petrolsulfonat mit dem Molekulargewicht 410 bis zu einer Salinität von 17,5 g/l bei Zimmertemperatur löslich. Eine Mischung aus 70 % des Petrolsulfonats und 30 % Substanz D war bis zu einer Salinität von 40 g/l löslich.

4

Tabelle 1:

| Modellöle | | | |
|---|---|---|---|
| Nr. | Beschreibung | Dichte 25°C | Brechungsindex |
| | | $g/cm^3$ | 25°C |
| I | vorwiegend Alkane | 0,830 | 1,4555 |
| II | Alkane mit ca. 20 % aromatisch/naphthenische Kohlenwasserstoffe | 0,824 | 1,4572 |
| III | Raffiniertes Öl naphthenisch | 0,881 | 1,4877 |

Tabelle 2

| Eiweiß-Fettsäure-Kondensationsprodukte | | | |
|---|---|---|---|
| Bezeichnung | n | m | $R_1$ |
| A | 0,5 | 1,0 | Cocosfettsäure |
| B | 2 | 1,0 | Cocosfettsäure |
| C | 3 | 1,0 | Cocosfettsäure |
| D | 17 | 1,0 | Cocosfettsäure |
| E | 23 | 1,0 | Cocosfettsäure |
| F | 2,5 | 1,0 | Ölsäure |
| G | 28 | 2,5 | Cocosfettsäure |

Der Index m bezeichnet die Molmenge Fettsäure auf 1 Mol Eiweiß. Der Index n bezeichnet die Zahl der Aminosäureeinheiten.

Tabelle 3

| Erfindungsgemäße Mischungen | | | | | | |
|---|---|---|---|---|---|---|
| Nr. | Komponente a) | | Komponente b | | Komponente c) | |
| | Bezeichnung | % | Bezeichnung | % | Bezeichnung | % |
| 1 | A | 60 | Sek. Alkansulfonat M = 328 | 27,5 | $C_9H_{19} \cdot C_6H_4(OCH_2CH_2)_{13}SO_3Na$ | 12,5 |
| 2 | B | 60 | Sek. Alkansulfonat M = 328 | 27,5 | $C_9H_{19} \cdot C_6H_4(OCH_2CH_2)_{13}SO_3Na$ | 12,5 |
| 3 | C | 60 | Sek. Alkansulfonat M = 328 | 27,5 | $C_9H_{19} \cdot C_6H_4(OCH_2CH_2)_{13}SO_3Na$ | 12,5 |
| 4 | B | 60 | Sek. Alkansulfonat M = 328 | 27,5 | $(C_4H_9)_3C_6H_2(OCH_2CH_2)_8SO_3Na$ | 12,5 |
| 5 | B | 30 | Sek. Alkansulfonat M = 328 | 70 | - | 0 |
| 6 | D | 30 | Sek. Alkansulfonat M = 328 | 70 | - | 0 |
| 7 | E | 30 | Sek. Alkansulfonat M = 328 | 70 | - | 0 |
| 8 | B | 70 | Sek. Alkansulfonat M = 328 | 30 | - | 0 |
| 9 | D | 26 | Petrolsulfonat M = 410 | 62 | $C_{12/14}H_{25/29}(OCH_2CH_2)_8OH$ | 12 |
| 10 | F | 60 | Sek. Alkansulfonat M = 328 | 27,5 | $C_9H_{19}C_6H_4(OCH_2CH_2)_{13}SO_3Na$ | 12,5 |
| 11 | G | 33 | Sek. Alkansulfonat M = 328 | 34 | $(C_4H_9)_3C_6H_2(OCH_2CH_2)_8SO_3Na$ | 33 |

Tabelle 4

| Phasenverhalten erfindungsgemäßer Mischungen | | | | | |
|---|---|---|---|---|---|
| Tensidmischung (s. Tabelle 3) | Phasenverhalten, 60° C | | | | |
| | Salzwasser + Tensid | | Salzwasser + Tensid + Öl | | |
| | $S_1$ g/l | $S_2$ g/l | Öl | optimale Salinität g/l | Solubilisierungsparameter |
| 1 | 70 | 180 | I | 95 | 10 |
| | | | I | 143 | 5,5 |
| 2 | 40 | > 200 | II | 142 | 9,5 |
| | | | III | 187 | 5,0 |
| 3 | 120 | > 200 | I | 155 | 8 |
| | | | II | 135 | 9,5 |
| 4 | 25 | > 200 | I | 117 | 12 |
| 5 | 50 | 150 | I | 120 | 8 |
| 6 | 80 | > 200 | I | 135 | 6 |
| 7 | 70 | > 200 | I | 145 | 6,5 |
| 8 | 0 | 150 | I | 130 | 8,5 |
| 9 | 0 | 35 | IV | 24 | 5,5 |
| 11 | 0 | > 200 | I | 155 | ca. 15 |

$S_1$ = Unterer Wert der Salinität für die Bildung einer homogenen Dispersion

$S_2$ = oberer Wert der Salinität für die Bildung einer homogenen Dispersion

I, II, III - Modellöle (s. Tabelle 1)

IV - Rohöl

Tabelle 5

| Anteil Mikroemulsion (Vol.-% der Öl-Salzwasser-Tensid-Mischung) bei der optimalen Salinität. Die Konzentrationen der Komponenten beziehen sich auf die mit Salzwasser verdünnten Tensidmischungen. | | | |
|---|---|---|---|
| Temperatur: 60° C. Modellöl I. | | | |
| | Mischung Nr. 5* | Vergleich | Vergleich |
| Eiweißhydrolysat-Fettsäure-Kondensat | 1,20 % | 1,20 % | 0 % |
| Alkansulfonat | 0,55 % | 0 % | 0,55 % |
| Ethersulfonat | 0,25 % | 0 % | 0,25 % |
| Anteil Mikroemulsion | 26 % | 0 % | 7 % |

* siehe Tabellen 2 und 3 für die genaue Zusammensetzung

Das Eiweiß-Fettsäurekondensationsprodukt für sich allein bildet keine Mikroemulsion und auch die Mischung der beiden Sulfonate gibt nur eine geringe Menge an Mikroemulsion. Erst die Mischung aller Produkte bildet überraschenderweise größere Mengen der Mikroemulsion.

**Ansprüche**

1. Wäßrige Tensideinstellungen, enthaltend ein Tensidgemisch aus:

a) 2 bis 95 %, vorzugsweise 20 bis 80 % eines Eiweiß-Fettsäure-Kondensats erhalten durch Umsetzung von 1 Mol eines Proteins der Formel

$$H_2N- \underset{\underset{R}{|}}{C}H-CO-[NH-\underset{\underset{R}{|}}{C}H-CO]_n-NH-\underset{\underset{R}{|}}{C}H-COOM$$

worin R den Rest einer Aminosäure, M ein Alkali- oder Ammonium-Ion und n Zahlen von 0 bis 50, vorzugsweise von 2 bis 33 bedeuten, mit 0,5 bis 4 Mol einer Fettsäure der Formel

$R_1$-COOH

worin $R_1$ $C_7$-$C_{21}$-Alkyl oder $C_7$-$C_{21}$-Alkenyl bedeutet,

b) 5 bis 98%, vorzugsweise 20 bis 80% eines Kohlenwasserstoffsulfonats und

c) 0 bis 80 % eines alkoxylierten Tensids.

2. Wäßrige Tensideinstellungen nach Anspruch 1 dadurch gekennzeichnet, daß Komponente b) ein sek. Alkansulfonat und Komponente c) ein Alkylphenolpolyalkoxyethersulfonat ist.

3. Wäßrige Tensideinstellungen nach Anspruch 1 oder 2, dadurch gekennzeichnet, daß sie insgesamt 20 bis 80 Gew.-% der Tenside a) und b) enthalten.

4. Verfahren zur Erhöhung der Ausbeute an Rohöl durch Tensidfluten, dadurch gekennzeichnet, daß man in die Lagerstätte eine wäßrige Tensideinstellung nach Anspruch 1 oder 2 einpreßt, die 0,1 bis 10 Gew.-% des Tensidgemischs enthält.

FIG.1

Temperatur [°C]

Salinität [g/l]

EP 0 379 101 A1

FIG.2

a)

**Phasenvolumen**

iii

ii

i

Salinität [g/l]
100  125  150  175  200  225

b)

**Phasenvolumen**

iii

ii

i

100  125  150  175  200  225

c)

**Phasenvolumen**

iii

i

Salinität [g/l]
100  125  150  175  200  225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 612 991 (J.E. SHAW) <br> * Insgesamt * <br> --- | 1-4 | B 01 F 17/00 <br> E 21 B 43/22 |
| A | US-A-4 088 189 (R.D. SHUPE) <br> * Patentansprüche <br> 1,16,17,18,30,31,33,34,36 * <br> ----- | 1,2 | |

RECHERCHIERTE
SACHGEBIETE (Int. Cl.5)

E 21 B

Der vorliegende Recherchenbericht wurde für alle Patentansprüche erstellt

| Recherchenort | Abschlußdatum der Recherche | Prüfer |
|---|---|---|
| DEN HAAG | 27-04-1990 | ROTSAERT L.D.C. |

EPO FORM 1503 03.82 (P0403)